# FASCICULE DE BREVET EUROPEEN

(11) **EP 2 828 906 B1**
(45) Date de publication et mention de la délivrance du brevet: **30.12.2015**
(21) Numéro de dépôt: 13712209.9
(22) Date de dépôt: 21.03.2013
(51) Int. Cl.: H01M 2/04, H01G 9/08, H01G 11/78, H01M 2/08, H01M 10/052, H01G 11/82, H01M 2/12, H01M 2/02

(54) **ENSEMBLE DE STOCKAGE D'ÉNERGIE COMPRENANT UNE BAGUE ÉLASTIQUE ISOLANTE ÉLECTRIQUEMENT**
ENERGIESPEICHERANORDNUNG MIT EINEM ELEKTRISCH ISOLIERENDEN ELASTISCHEN RING
ENERGY STORAGE ASSEMBLY COMPRISING AN ELECTRICALLY INSULATING ELASTIC RING

(30) Priorité: 21.03.2012 FR 1252536
(43) Date de publication de la demande: 28.01.2015
(73) Titulaire: Blue Solutions, 29500 Ergué Gabéric (FR)
(72) Inventeur: JOURDREN, Arnaud, F-29500 Ergue Gaberic (FR); BAYLARD, Eric, F-29480 Le Relecq Kerhuon (FR)
(74) Mandataire: Regimbeau
(86) Numéro de dépôt international: PCT/EP2013/055963
(87) Numéro de publication internationale: WO 2013/139924

(56) Documents cités:
- FR-A1- 2 894 381
- FR-A1- 2 979 473
- GB-A- 604 458
- GB-A- 1 178 859
- JP-A- 2002 329 485
- JP-A- 2004 079 469
- US-A- 4 063 902
- US-A1- 2008 268 336

## Description

La présente invention concerne le domaine technique général des ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode). On a employé dans la suite les termes « élément électrochimique » ou « élément capacitif » pour désigner la partie de l'ensemble permettant le stockage effectif de l'énergie.

### PRESENTATION GENERALE DE L'ART ANTERIEUR

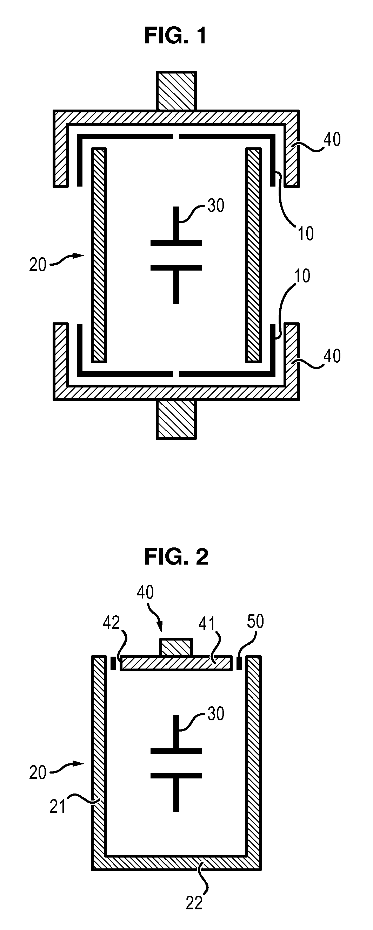

On a illustré à la figure 1 un exemple d'ensemble de stockage d'énergie du type supercondensateur tubulaire tel que décrit dans le document FR 2 979 473. Cet ensemble de stockage d'énergie comprend une enveloppe tubulaire 20 ouverte à ses deux extrémités, un enroulement capacitif 30 et un électrolyte liquide contenus dans l'enveloppe tubulaire 20, et deux couvercles 40 destinés à coiffer les extrémités ouvertes de l'élément tubulaire 20. Les couvercles sont généralement fixés à l'enveloppe par collage. L'enveloppe et les couvercles sont par exemple en métal tel que de l'aluminium.

L'ensemble de stockage comprend également une pièce intermédiaire 10 isolante électriquement entre chaque couvercle et l'enveloppe. La pièce intermédiaire 10 peut être en polymère rigide ou semi-rigide et est généralement emmanché en force sur le couvercle ou sur l'enveloppe lors de l'assemblage de l'ensemble de stockage.

Cette pièce intermédiaire 10 permet d'assurer l'isolation électrique entre l'enveloppe et chaque couvercle. Elle permet également d'empêcher la colle de pénétrer dans l'enveloppe lors de l'assemblage de l'ensemble de stockage.

Un inconvénient d'un tel ensemble de stockage est que sa réalisation est très contraignante dimensionnellement. En effet, la précision concernant les dimensions de l'enveloppe, du couvercle et de la pièce intermédiaire doit être très importante pour permettre un assemblage correct de l'ensemble de stockage.

Un autre inconvénient de cet ensemble de stockage concerne les risques de déformation de la pièce intermédiaire du fait des variations de température subies par les différents éléments constituant l'ensemble de stockage lors de son assemblage. En effet, il n'existe pas de polymère à faible coût présentant un coefficient de dilatation proche de l'aluminium. De ce fait, il y'a un risque de dilatation et de déchaussement de la pièce intermédiaire sous l'effet de forte variation de température. En cas de déchaussement, la pièce intermédiaire ne retient plus la colle qui peut alors pénétrer dans l'enveloppe et engendrer des perturbations de performances.

Le document JP 2002 329485 décrit un joint d'étanchéité destiné à être positionné entre une ouverture d'un récipient sous pression 20 et une paroi périphérique d'un corps.

Le document US 4 063 902 décrit une pile galvanique dans laquelle un joint élastomère est disposé et comprimé entre un couvercle et logement de la pile galvanique.

Le document JP 2004 07 94 69 décrit une batterie incluant un élément de stockage d'énergie comprenant une structure d'électrode et un électrolyte, l'élément de stockage étant logé dans un boîtier de la batterie. Le boîtier de la batterie est composé d'un corps et d'un couvercle. Un joint torique permet de sceller une zone entre le corps et le couvercle.

Le document GB 1 178 859 décrit une batterie dans laquelle un joint annulaire comprenant des canaux de dégazage est disposé entre le couvercle et l'enveloppe de la batterie.

Un but de la présente invention est de proposer un ensemble de stockage et un procédé d'assemblage d'un tel ensemble permettant de pallier les inconvénients précités.

### PRESENTATION DE L'INVENTION

A cet effet on prévoit un ensemble de stockage d'énergie électrique tel que décrit à la revendication 1.

De préférence, la bague est réalisée dans un matériau présentant un coefficient de dilatation proche de celui de l'aluminium.

L'utilisation d'une bague annulaire élastique présente de nombreux avantages. Elle permet d'assurer les mêmes fonctions que la pièce intermédiaire 10 des ensembles de stockage de l'art antérieur - à savoir isolation électrique du couvercle et de l'enveloppe d'une part et barrière à la colle d'autre part - et permet en outre de compenser les jeux de montage liés aux variations de dimensions possible du couvercle et de l'enveloppe.

Des aspects préférés mais non limitatifs de l'ensemble de stockage selon l'invention sont les suivants :
- le matériau constituant la bague est un élastomère, notamment de l'EPDM
- le matériau constituant la bague est une mousse, par exemple une mousse élastomère,
- la bague est fendue sur toute sa hauteur. C'est alors la possible déformation de la bague qui donne à cette dernière son élasticité. Dans ce cas, la fente peut avoir une forme complexe (en S, en créneaux, etc.),
- l'ensemble de stockage comprend en outre au moins un canal de dégazage défini entre la bague et l'enveloppe et/ou entre la bague et le couvercle pour permettre le passage de gaz entre l'intérieur et l'extérieur de l'ensemble de stockage,
- dans un premier mode de réalisation, la bague présente la forme d'un tube, ladite bague comprenant au moins un évidement s'étendant sur toute la dimension longitudinale de la bague sur au moins l'une de ses faces, chaque évidement formant un canal de dégazage avec la paroi latérale du couvercle ou de l'enveloppe. L'évidement s'étend de préférence selon la direction longitudinale de la bague,
- l'enveloppe ou le couvercle peut également ou alternativement présenter sur une face de sa paroi latérale destinée à être en regard de la bague, au moins un évidement s'étendant au moins partiellement selon la dimension longitudinale de la paroi latérale, chaque évidement formant un canal de dégazage avec la bague. « s'étendant au moins particulièrement selon la dimension longitudinale » signifie que l'évidement s'étend selon un trajet qui a au moins une composante longitudinale, notamment dans la direction longitudinale de la paroi latérale. Il s'étend également sur une dimension supérieure ou égale à la dimension de la bague selon cette direction longitudinale,
- la bague peut également présenter la forme d'un tube, ladite bague comprenant au moins un plot s'étendant radialement sur au moins l'une de ses faces, chaque plot définissant au moins partiellement un canal de dégazage avec la paroi latérale du couvercle ou de l'enveloppe. Le plot écarte en effet localement la bague de la paroi, l'espace formé au voisinage de ce plot correspondant à un canal de dégazage
- la paroi latérale du couvercle ou de l'enveloppe peut également comprendre au moins un plot s'étendant radialement sur sa face destinée à être en regard avec la bague, chaque plot définissant au moins partiellement un canal de dégazage avec la face de la bague destinée à venir en regard de ladite face latérale.
- la paroi latérale du couvercle ou de l'enveloppe peut également comprendre un dégagement destiné à recevoir la bague,
- l'enveloppe ou le couvercle comprend une rainure de positionnement, sur une face destinée à être en regard de la bague. Cette rainure est notamment une rainure périphérique et permet de plaquer la bague contre l'autre élément pour assurer un bon maintien de la bague entre ces deux éléments. La bague pourrait également comprendre un canal complémentaire de la rainure de positionnement pour accueillir celle-ci,
- la bague présente une section en pointe sur au moins une de ses faces de sorte que le contact de la bague avec le couvercle ou l'enveloppe soit un contact de type linéaire. Cela permet de faciliter l'insertion de la bague sur l'enveloppe ou le couvercle. Le profil de la bague peut notamment être de profil symétrique (profil de type losange),
- la bague comprend au moins une languette s'étendant selon la direction longitudinale de la bague et prolongeant localement celle-ci dans cette direction. On peut ainsi diminuer localement la hauteur de colle insérée entre le couvercle et l'enveloppe (la colle ne pouvant être insérée qu'en l'absence de la bague), et créer des faiblesses mécaniques locales pour mieux pouvoir séparer couvercle et enveloppe si besoin,
- les parois latérales du couvercle et de l'enveloppe entre lesquelles est positionnée la bague sont parallèles sur toute la zone au niveau de laquelle elles sont en contact avec la bague. De préférence, chacune de ces parois présente un profil rectiligne selon la direction longitudinale de l'ensemble au niveau de cette zone à savoir qu'elle est dépourvue de saillie ou de cavité. Il n'est en effet pas nécessaire dans l'invention de déformer l'une ou l'autre des parois latérales afin de comprimer la bague et les parois peuvent donc rester parallèles et de conception simple,
- l'ensemble comprend également une colle positionnée entre les parois latérales du couvercle et de l'enveloppe, de sorte que la bague est positionnée sur le trajet que la colle doit emprunter pour entrer en contact avec l'élément électrochimique se trouvant à l'intérieur de l'enveloppe. En d'autres termes, lorsque la paroi latérale du couvercle est entourée par la paroi latérale de l'enveloppe, le trajet depuis l'extérieur de l'ensemble pour entrer en contact avec l'élément électrochimique est rectiligne et la colle se trouve plus proche de l'extrémité libre de l'ensemble que le joint. En revanche, lorsque la paroi latérale du couvercle entoure celle de l'enveloppe, le trajet depuis l'extérieur de l'ensemble pour entrer en contact avec l'élément électrochimique forme un U dont le fond est formé par l'extrémité longitudinale de l'ensemble, le joint étant alors plus proche de l'extrémité longitudinale de l'ensemble que la colle.

L'invention concerne également un procédé d'assemblage d'un ensemble de stockage d'énergie électrique comprenant au moins une enveloppe incluant au moins une paroi latérale et au moins une extrémité ouverte, un élément électrochimique, et au moins un couvercle incluant une paroi couvrante et une paroi latérale à la périphérie de la paroi couvrante, le procédé comprenant au moins les étapes suivantes :
- positionner l'élément électrochimique dans l'enveloppe,
- positionner le couvercle sur la face ouverte de l'enveloppe, remarquable en ce qu'il comprend en outre une étape consistant à positionner une bague annulaire élastique isolante électriquement entre le couvercle et l'enveloppe.

Des aspects préférés mais non limitatifs du procédé selon l'invention sont les suivants :
Les étapes de positionnement du couvercle et de la bague peuvent comprendre les sous étapes suivantes :
   - le positionnement de la bague sur la paroi latérale du couvercle,
   - le positionnement du groupe constitué de la bague et du couvercle sur l'extrémité ouverte de l'enveloppe.

Elles peuvent également comprendre les sous étapes suivantes :
- le positionnement de la bague sur la paroi latérale de l'enveloppe,
- le positionnement du couvercle sur le groupe constitué de la bague et de l'enveloppe ;
   ou de préférence les sous-étapes suivantes :
- le positionnement du couvercle sur l'extrémité ouverte de l'enveloppe,
- le positionnement de la bague entre la face latérale du couvercle et la paroi latérale de l'enveloppe, notamment par insertion en force.

On notera que le procédé est dépourvu d'une étape de déformation de l'une des parois latérales suite à l'insertion de la bague puisqu'il n'est pas nécessaire de comprimer la bague pour réaliser une étanchéité parfaite de l'ensemble, cette bague participant uniquement à l'étanchéité de façon temporaire jusqu'à ce que la colle soit mise en place sur l'ensemble.

La colle est insérée entre le couvercle et l'enveloppe une fois la bague, le couvercle et l'enveloppe positionnés les uns par rapport aux autres. Elle est ensuite chauffée pour la polymériser. La colle participe ainsi à l'étanchéité de l'ensemble.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre un mode de réalisation d'un ensemble de stockage de l'art antérieur,
- les figures 2, 3, 7 et 9 illustrent schématiquement différents modes de réalisation d'un ensemble de stockage d'énergie selon l'invention,
- les figures 4, 5, 6 et 10 illustrent schématiquement différents modes de réalisation d'une bague annulaire d'un ensemble de stockage selon l'invention,
- la figure 8 est un diagramme illustrant un exemple de procédé d'assemblage d'un ensemble de stockage d'énergie selon l'invention ;
- les figures 11 et 12 sont des vues en coupe d'un ensemble de stockage d'énergie selon les modes de réalisation de l'invention des figures 3 et 2 une fois que la colle a été placée sur l'ensemble de stockage.

### DESCRIPTION DE L'INVENTION

On va maintenant décrire différents modes de réalisation de l'ensemble de stockage selon l'invention et de son procédé de fabrication en référence aux figures. Dans ces différentes figures, les éléments équivalents de l'ensemble de stockage portent les mêmes références numériques.

En référence à la figure 2, on a illustré une variante de réalisation d'ensemble de stockage selon l'invention. L'ensemble de stockage comprend une enveloppe 20, un élément électrochimique, ou capacitif, 30 et un couvercle 40.

L'enveloppe 20 est composée d'une paroi latérale 21 cylindrique ouverte à l'une de ses extrémités et d'une paroi de fond 22 à son autre extrémité. Elle forme un logement pour l'élément capacitif 30.

Le couvercle 40 est destiné à être positionné au niveau de l'extrémité ouverte de l'enveloppe 20. Le couvercle 40 comprend une paroi couvrante 41 et une paroi latérale 42 à la périphérie de la paroi couvrante. La paroi couvrante 41 est destinée à recouvrir l'extrémité ouverte de l'enveloppe 20. La paroi latérale 42 est destinée à venir en regard de la paroi latérale 21 de l'enveloppe 20.

L'élément électrochimique 30 est par exemple constitué de deux complexes et d'un séparateur isolant électriquement entre les deux complexes. Chaque complexe comprend un collecteur de courant et au moins une électrode. Chaque électrode peut être réalisée à partir de carbone activé, d'un additif conducteur et d'un (ou plusieurs) polymère(s) permettant de lier les deux précédents constituants. Cette électrode est ensuite enduite ou extrudée sur le collecteur de courant. Elle constitue la matière active du complexe. Le matériau constituant le collecteur de courant est par exemple de l'aluminium, du nickel, du cuivre ou de l'acier inoxydable. Le matériau du collecteur de courant est choisi pour son inertie chimique et électrochimique vis-à-vis des constituants de l'électrode de l'électrolyte. Les complexes et le séparateur peuvent être enroulés ensemble en spire pour former un élément bobiné. Cet élément bobiné est ensuite imprégné avec un électrolyte aqueux ou organique. Cet électrolyte comprend des ions et est électriquement conducteur.

La (ou les) électrodes positive(s) de l'élément capacitif est (sont) connectée(s) électriquement au couvercle. La (ou les) électrode(s) négative(s) de l'élément capacitif est (sont) connectée(s) électriquement à l'enveloppe.

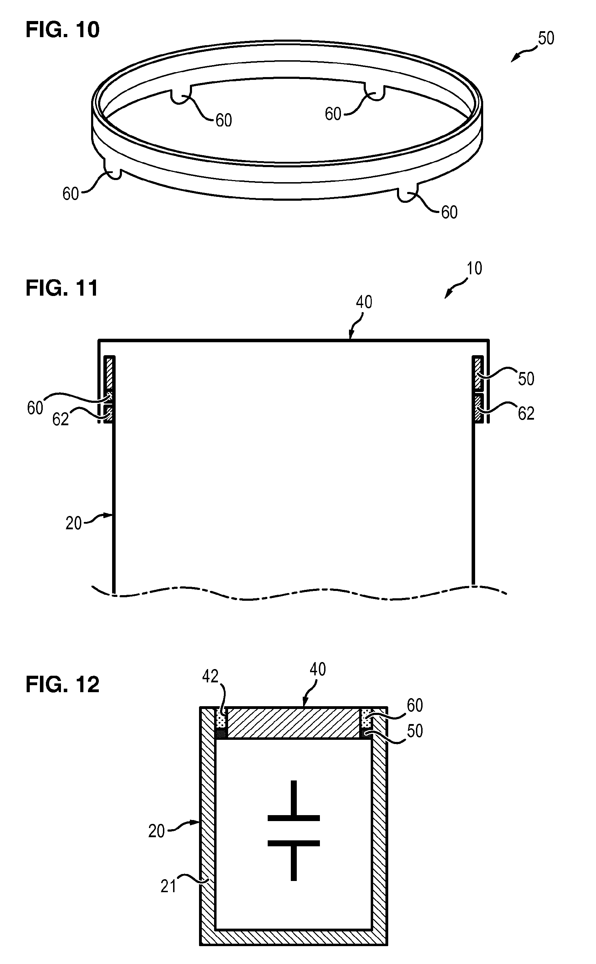

L'ensemble de stockage d'énergie électrique comprend une bague annulaire 50 isolante électriquement qui présente avantageusement la forme générale d'un tube ouvert à ses deux extrémités. Cette bague 50 est destinée à être positionnée entre le couvercle 40 et l'enveloppe 20, coaxialement à l'enveloppe. Dans le mode de réalisation illustré à la figure 2, la bague 50 est disposée entre la paroi latérale 42 du couvercle 40 et la face intérieure de la paroi latérale 21 de l'enveloppe 20. Cette bague permet d'isoler électriquement l'enveloppe du couvercle. Cette bague permet également d'empêcher la colle de pénétrer à l'intérieur de l'enveloppe lors de la phase d'assemblage de l'ensemble de stockage, comme cela est représenté plus clairement à la figure 12.

L'utilisation d'une bague annulaire 50 permet de faciliter la phase d'assemblage de l'ensemble de stockage tout en assurant les mêmes fonctions que la pièce intermédiaire 10 utilisée dans les ensembles de stockage de l'art antérieur.

De préférence, la bague annulaire 50 est élastique pour faciliter sa mise en place et son maintien entre l'enveloppe et le couvercle lors de la phase d'assemblage. Par ailleurs, l'élasticité de la bague permet de combler les jeux de montage liés à l'incertitude sur les dimensions du (ou des) couvercle(s) et de l'enveloppe.

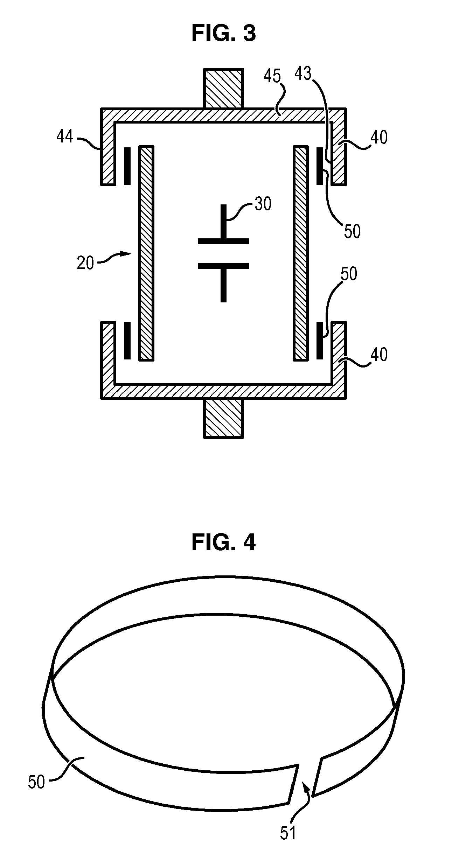

Par exemple, la bague 50 peut être réalisée dans un matériau élastique ou non élastique et comprendre une fente 51 - telle qu'une fente oblique, une fente curviligne, etc. - sur toute sa hauteur, comme illustré à la figure 4. Cette fente 51 confère une élasticité radiale à la bague 50 lui permettant d'être insérée et de se maintenir plus facilement sur le couvercle 40.

En variante, la bague peut être réalisée en un matériau élastique tel qu'un élastomère. Par exemple, le matériau constituant la bague peut être de l'éthylène-propylène-diène monomère (EPDM).

Les dimensions de la bague sont adaptées aux dimensions du couvercle et de l'enveloppe. Notamment, le diamètre intérieur de la bague est prévu légèrement inférieur - ou sensiblement égal - au diamètre extérieur du couvercle. Ceci permet d'assurer un bon maintien en position de la bague sur le couvercle. Egalement, le diamètre extérieur de la bague est prévu légèrement supérieur - ou sensiblement égal - au diamètre intérieur de l'enveloppe. Ceci permet d'assurer un bon maintien en position de de la bague et du couvercle sur l'enveloppe.

La bague peut présenter différents profils en section. Par exemple, la bague peut avoir une section de profil circulaire ou polygonale telle qu'une section quadrangulaire. L'épaisseur de la bague annulaire peut être constante sur toute sa hauteur ou être variable. Par exemple la bague peut présenter une forme biconique (ou en pointe) allant en s'amincissant vers les extrémités longitudinales de la bague. En variante, la bague peut présenter des zones d'épaisseurs réduites au niveau de ses extrémités ouvertes. Ceci permet de réduire la surface de contact entre la bague et le couvercle/l'enveloppe et ainsi de faciliter l'insertion de la bague sur le couvercle et/ou l'enveloppe. On notera qu'un profil symétrique tel qu'une section en losange permet de façon avantageuse de s'affranchir de sens de montage (réversibilité).

En référence à la figure 3, on a illustré une autre variante de réalisation d'ensemble de stockage selon l'invention. L'ensemble de stockage comprend une enveloppe, un élément capacitif et deux couvercles. En variante, on notera que l'ensemble peut comprendre une enveloppe formant un boîtier avec un fond et un couvercle placé seulement à une extrémité ouverte de celui-ci.

L'enveloppe est composée d'une paroi latérale cylindrique ouverte à ses deux extrémités.

Chaque couvercle 40 est destiné à être positionné au niveau d'une extrémité ouverte respective de l'enveloppe 20. Chaque couvercle 40 comprend une paroi couvrante 45 et une jupe périphérique 44 présentant une paroi latérale 43. La paroi couvrante 45 est destinée à recouvrir l'extrémité ouverte de l'enveloppe 20. La paroi latérale 43 est destinée à venir en regard de la paroi latérale 21 de l'enveloppe 20 et à entourer celle-ci au niveau de ses extrémités.

L'ensemble de stockage comprend également deux bagues annulaires isolantes électriquement 50. Chaque bague 50 est associée à un couvercle respectif et est positionnée entre la face externe de la paroi latérale 21 de l'enveloppe et la face interne de la paroi latérale 43 du couvercle.

Le diamètre intérieur de la bague 50 est prévu légèrement inférieur - ou sensiblement égal - au diamètre extérieur de l'enveloppe 20. Ceci permet d'assurer un bon maintien en position de la bague 50 sur l'enveloppe 20. Le diamètre extérieur de la bague 50 est prévu légèrement supérieur - ou sensiblement égal - au diamètre intérieur de la jupe périphérique 44 du couvercle 40. Ceci permet d'assurer un bon maintien en position du couvercle 40 sur la bague 50 lors de la phase d'assemblage de l'ensemble de stockage.

On a donc illustré deux variantes de réalisation d'ensembles de stockage selon l'invention. Dans la première variante, la bague annulaire 50 entoure la paroi latérale 42 du couvercle 40 et est elle-même entourée par la paroi latérale 21 de l'enveloppe 20. Dans la deuxième variante, la bague 50 entoure la paroi latérale 21 de l'enveloppe 20 et est elle-même entourée par la paroi latérale 43 de la jupe périphérique 44 du couvercle 40.

Quel que soit son mode de réalisation, l'ensemble de stockage de la présente invention comprend au moins un canal de dégazage. Ce canal de dégazage permet d'évacuer l'air éventuellement emprisonné dans la colle utilisée lors de la phase d'assemblage de l'ensemble de stockage.

En variante, la bague annulaire 50 peut être réalisée en mousse. Ceci peut permettre de s'affranchir de la présence de canal de dégazage, l'évacuation d'air se faisant dans ce cas directement à travers la mousse (dans le cas d'une mousse à cellule ouverte). On notera qu'un joint fabriqué à l'aide d'une mousse à cellules fermées est également envisageable dans le cadre de l'invention.

Dans le contexte de la présente invention le canal de dégazage est positionné entre le couvercle et la bague, et/ou entre la bague et l'enveloppe.

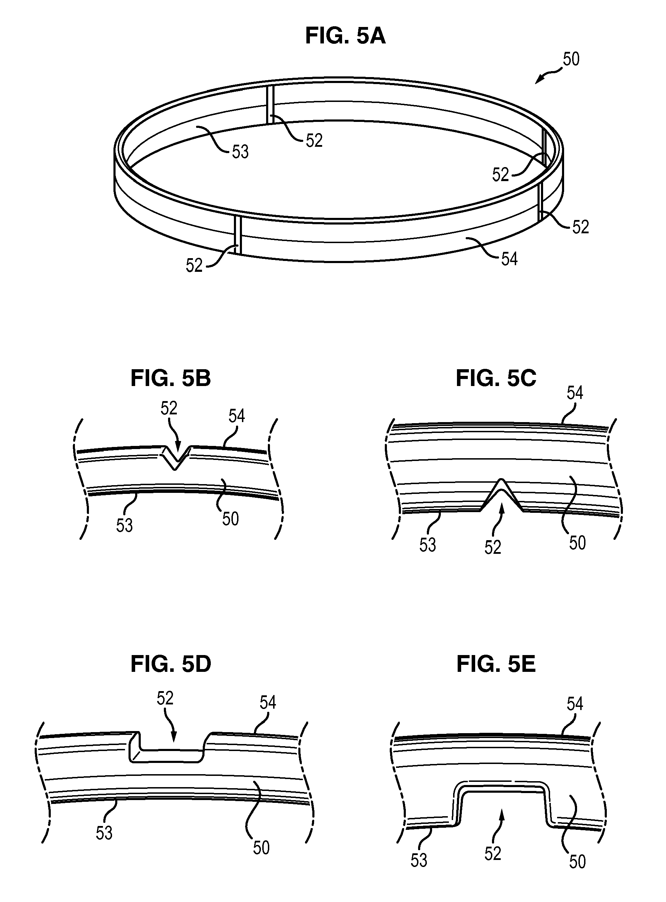

Dans le mode de réalisation illustré aux figures 5A à 5E, le canal de dégazage comprend un évidement agencé dans la bague annulaire 50 et s'étendant sur toute la dimension longitudinale de la bague. Cet évidement peut être une gorge 52 s'étendant sur toute la hauteur de la bague 50. Cette gorge 52 peut être prévue sur la face externe 54 de la bague annulaire 50 (figures 5B et 5D) ou sur la face interne 53 de la bague annulaire 50 (figures 5C et 5E). Cette gorge 52 peut présenter différentes formes telle que des formes cylindrique, triangulaire, carrée, rectangulaire, etc. en section selon un plan perpendiculaire à l'axe de révolution de la bague. Par ailleurs, les dimensions et le nombre de gorge peuvent varier.

En référence à la figure 2, lorsque la gorge 52 s'étend sur la face interne 53 de la bague 50, la gorge 52 et la paroi latérale 42 du couvercle 40 forment le canal de dégazage. Lorsque la gorge 52 s'étend sur la face externe 54 de la bague 50, la gorge 52 et la paroi latérale 21 de l'enveloppe 20 forment le canal de dégazage.

En référence à la figure 3, lorsque la gorge 52 s'étend sur la face interne 53 de la bague 50, la gorge 52 et la paroi latérale 21 de l'enveloppe 20 forment le canal de dégazage. Lorsque la gorge 52 s'étend sur la face externe 54 de la bague 50, la gorge 52 et la paroi latérale 43 de la jupe périphérique 44 du couvercle 40 forment le canal de dégazage.

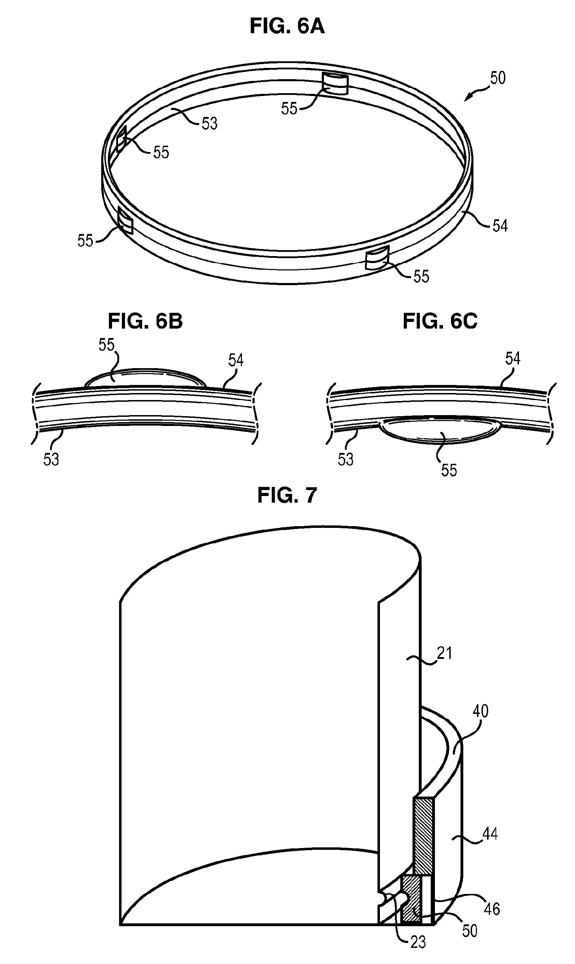

Dans le mode de réalisation illustré aux figures 6A à 6C, le canal de dégazage est défini au moins en partie par un (ou plusieurs) plot(s) 55 s'étendant radialement. Ce plot 55 peut être prévu sur la face interne 53 et/ou sur la face externe 54 de la bague annulaire 50. Ce plot permet d'écarter la bague de la paroi latérale de l'enveloppe ou du couvercle pour définir le canal de dégazage. Un canal longitudinal est alors formé de chaque côté du plot.

En référence à la figure 2, lorsque le plot 55 s'étend sur la face interne 53 de la bague 50, le plot 55 et la paroi latérale 42 du couvercle 40 définissent le canal de dégazage. Lorsque le plot 55 s'étend sur la face externe 54 de la bague 50, le plot 55 et la paroi latérale 21 de l'enveloppe 20 définissent le canal de dégazage.

En référence à la figure 3, lorsque le plot 55 s'étend sur la face interne 53 de la bague 50, le plot 55 et la paroi latérale 21 de l'enveloppe 20 définissent le canal de dégazage. Lorsque le plot 55 s'étend sur la face externe 54 de la bague 50, le plot 55 et la face latérale 43 de la jupe périphérique 44 du couvercle 40 forment le canal de dégazage.

Dans le contexte de la présente invention, le canal de dégazage est dans tous les cas pour le moins formé à l'aide d'une gorge agencé sur la paroi latérale de l'enveloppe (sur la face interne dans le cas de la figure 2 et sur la face externe dans le cas de la figure 3) ou sur la paroi latérale du couvercle. Dans ce cas, la face interne/externe de la bague et la gorge/le plot prévu sur l'enveloppe/ le couvercle définissent le canal de dégazage.

En référence à la figure 7, on a illustré un mode de réalisation de l'ensemble de stockage dans lequel le couvercle 40 comprend une jupe périphérique 44 incluant un dégagement 46 s'étendant sur toute la périphérie de la face interne de la jupe 44. Ce dégagement 46 est destiné à recevoir la bague annulaire 50. Le dégagement 46 permet d'améliorer le maintien en position de la bague 50 lors de la phase d'assemblage de l'ensemble de stockage. En variante, le dégagement peut être prévu dans la paroi latérale de l'enveloppe 20 :
- sur sa face interne dans le cas de l'ensemble de stockage illustré à la figure 2, ou
- sur sa face externe dans le cas de l'ensemble de stockage illustré à la figure 3.

Dans le mode de réalisation illustré à la figure 7, l'enveloppe 20 comprend une rainure 23 s'étendant à la périphérie de la face externe de la paroi latérale 21. Cette rainure 23 est destinée à compresser la bague 50 et à la plaquer à la fois contre le couvercle et l'enveloppe. La rainure 23 permet d'améliorer le maintien en position de la bague 50 sur l'enveloppe 20 lors de la phase d'assemblage de l'ensemble de stockage. En variante, la rainure périphérique peut être agencée sur la face interne de la paroi latérale du couvercle 40. Dans tous les cas, la rainure peut s'étendre sur toute la périphérie de l'enveloppe/du couvercle, ou s'étendre uniquement sur une portion de l'enveloppe/du couvercle.

Dans le mode de réalisation représenté à la figure 10, la bague 50 comprend des languettes 60 prolongeant localement la bague vers le bas dans la direction longitudinale de celle-ci. De telles languettes engendrent une variation de la dimension (augmentation locale) de la bague selon la direction longitudinale. Ainsi, ces languettes permettent de contrôler la hauteur de colle 62 entre le couvercle et l'enveloppe et de diminuer localement celle-ci au niveau des languettes, comme on le voit mieux sur la figure 11. On crée alors des faiblesses mécaniques au niveau du boîtier de l'ensemble de stockage, ce qui permet de plus facilement désolidariser le couvercle et l'enveloppe si besoin.

On va maintenant décrire plus en détail un exemple de procédé d'assemblage de l'ensemble de stockage d'énergie selon l'invention.

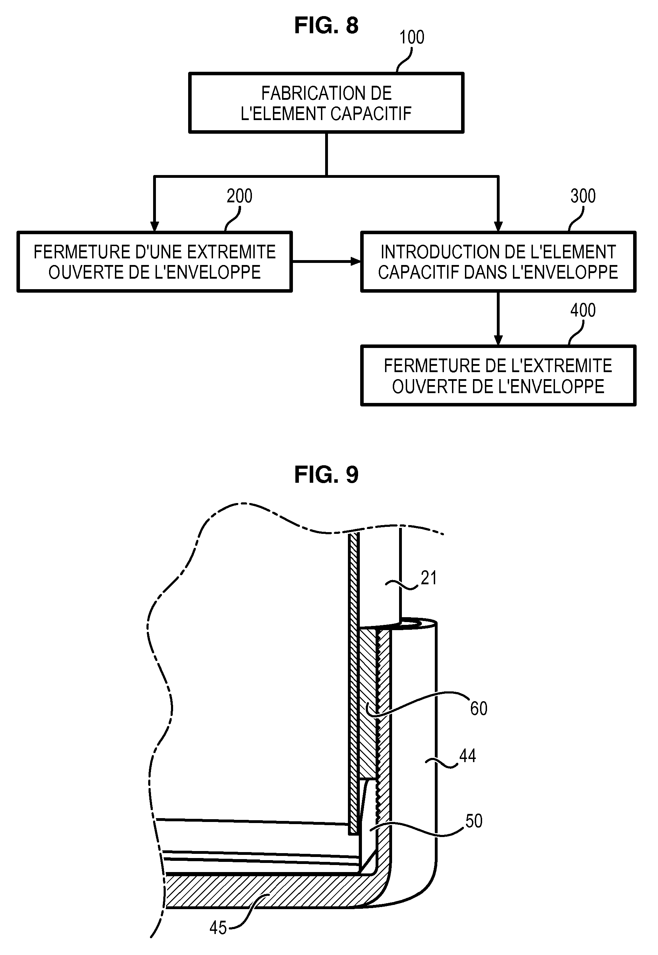

En référence à la figure 8, le procédé comprend une étape 100 de fabrication de l'élément capacitif 30. Un séparateur est superposé à un premier complexe et un deuxième complexe est superposé au séparateur de sorte à obtenir un empilement de deux complexes entre lesquels est disposé le séparateur. Les complexes et le séparateur sont ensuite enroulés ensemble en spire pour former un élément bobiné. L'élément bobiné est imprégné d'électrolyte de sorte à obtenir l'élément capacitif 30.

Dans le cas où l'enveloppe 20 comprend un fond 22, l'étape suivante 300 consiste à introduire l'élément capacitif 30 dans l'enveloppe 20.

Dans le cas où l'enveloppe 20 est ouverte à ses deux extrémités, le procédé peut comprendre, préalablement à l'étape 300 consistant à introduire l'élément capacitif 30 dans l'enveloppe 20, les étapes 200 consistant à :
- couvrir l'une des extrémités de l'enveloppe 20 avec un couvercle 40,
- positionner une bague 50.

La bague 50 peut être positionnée sur l'ensemble de stockage de différentes façons. Par exemple, la bague 50 peut être positionnée sur le couvercle 40 préalablement à l'assemblage du couvercle 40 sur l'enveloppe 20. En variante, la bague 50 peut être positionnée sur l'enveloppe 20 préalablement à l'assemblage du couvercle 40 sur l'enveloppe 20. En variante encore, la bague 50 peut être positionnée entre le couvercle 40 et l'enveloppe 20 postérieurement à l'assemblage du couvercle 40 et de l'enveloppe 20.

Le couvercle et la bague sont ensuite placés sur l'enveloppe. La colle est ensuite mise en place entre le couvercle et l'enveloppe pour coller l'enveloppe et le couvercle. La bague est interposée entre l'extrémité de l'ensemble et la colle. Elle n'est pas solidarisée au couvercle ou à l'enveloppe du fait de la colle. De par sa présence, la bague empêche en effet le passage de la colle. Elle se trouve effectivement sur le trajet que devrait emprunter la colle pour entrer en contact avec l'élément capacitif, ce trajet formant un U dont la paroi extrême du couvercle forme le fond.

Une autre étape 400 du procédé consiste à fermer l'extrémité ouverte (ou l'autre extrémité ouverte dans le cas où l'enveloppe 20 était ouverte à ses deux extrémités) de l'enveloppe 20.

Comme précédemment décrit, l'étape 400 de fermeture de l'extrémité ouverte de l'enveloppe 20 comprend le positionnement de la bague 50 et le positionnement du couvercle 40. La bague 50 peut être positionnée sur le couvercle 40 ou sur l'enveloppe 20 préalablement à l'assemblage du couvercle 40 sur l'enveloppe 20, ou elle peut être positionnée entre le couvercle 40 et l'enveloppe 20 postérieurement à l'assemblage du couvercle 40 sur l'enveloppe 20 par collage. Dans ce cas, la bague est insérée entre le couvercle et l'enveloppe à l'aide d'un lubrifiant compatible chimiquement avec l'électrolyte. Une fois le couvercle, la bague et l'enveloppe assemblés, ceux-ci sont fixés ensemble par collage sur toute la circonférence de l'enveloppe.

La figure 9 illustre partiellement un exemple d'ensemble de stockage obtenu en mettant en oeuvre le procédé décrit ci-dessus. L'ensemble de stockage comprend une enveloppe 20 incluant une paroi latérale 21. L'extrémité ouverte de l'enveloppe 20 est coiffée par un couvercle 40 comprenant une paroi couvrante 45 et une jupe périphérique 44. La face interne de la jupe périphérique 44 est en regard de la face externe de la paroi latérale 21. Une bague annulaire 50 est disposée entre la paroi latérale et la jupe périphérique. La géométrie de la bague élastomère est développée pour prendre place dans le fond du couvercle 40 et obstruer toute ou partie de colle 60 venant se superposer à la bague 50.

En variante, comme représenté à la figure 12, le couvercle 40 forme un cylindre plein positionné à l'intérieur de l'enveloppe 20 de sorte que la paroi latérale 21 de l'enveloppe 20 entoure la paroi latérale 42 du couvercle. La bague 50 est insérée entre les parois latérales 21, 42 de sorte qu'elle se trouve au plus proche de l'intérieur de l'enveloppe. Dans cette variante, la colle 60 est également insérée entre les parois latérales 21, 42 de sorte qu'elle est située au plus proche de l'extrémité libre de l'ensemble selon la direction longitudinale de celui-ci. La bague 50 se trouve ainsi sur le trajet que devrait emprunter la colle pour entrer en contact avec l'élément capacitif.

Le lecteur aura compris que de nombreuses modifications peuvent être apportées à l'ensemble de stockage décrit précédemment et à son procédé de fabrication associé sans sortir matériellement des nouveaux enseignements et des avantages décrits ici.

Notamment, l'élément capacitif peut être de forme cylindrique, prismatique ou de toute autre forme connu de l'homme du métier. Par ailleurs, l'enveloppe et le couvercle peuvent également présenter différentes formes telles que des formes en section ovale, carré, rectangulaire, triangulaire etc.

Par conséquent, toutes les modifications de ce type entrent dans l'ensemble de stockage tel que défini dans les revendications jointes.

## Revendications

1. Ensemble de stockage d'énergie électrique comprenant :
- au moins une enveloppe (20) incluant :
o au moins une paroi latérale (21), et
o au moins une extrémité ouverte,
- un élément électrochimique (30) destiné à être contenu dans l'enveloppe (20) et
- au moins un couvercle (40) destiné à être positionné au niveau de la ou de l'une des extrémités ouvertes de l'enveloppe (20), chaque couvercle (40) incluant :
o une paroi couvrante (41, 45) destinée à recouvrir l'extrémité ouverte de l'enveloppe (20),
o une paroi latérale (42, 43) à la périphérie de la paroi couvrante (41, 45) et destinée à venir en regard de la paroi latérale (21) de l'enveloppe (20),
- au moins une bague annulaire élastique isolante électriquement (50) destinée à être positionnée entre la paroi latérale (21) de l'enveloppe (20) et la paroi latérale (42, 43) du couvercle (40),
- au moins un canal de dégazage défini entre la bague (50) et l'enveloppe (20) et/ou entre la bague (50) et le couvercle (40) pour permettre le passage de gaz entre l'intérieur et l'extérieur de l'ensemble de stockage, **caractérisé en ce que** l'enveloppe ou le couvercle présente sur une face de sa paroi latérale destinée à être en regard de la bague, au moins un évidement s'étendant au moins partiellement selon la dimension longitudinale de la paroi latérale, chaque évidement formant un canal de dégazage avec la bague.

2. Ensemble de stockage selon la revendication 1, dans lequel le matériau constituant la bague (50) est un élastomère.

3. Ensemble de stockage selon la revendication 2, dans lequel le matériau constituant la bague (50) est de l'éthylène-propylène-diène monomère.

4. Ensemble de stockage selon l'une des revendications précédentes, dans lequel le matériau constituant la bague (50) est une mousse.

5. Ensemble de stockage selon l'une quelconque des revendications précédentes, dans lequel la bague (50) est fendue sur toute sa hauteur.

6. Ensemble de stockage selon la revendication 1, dans lequel la bague (50) présente la forme d'un tube, ladite bague (50) comprenant au moins un évidement (52) s'étendant sur toute la dimension longitudinale de la bague sur au moins l'une de ses faces (53, 54), chaque évidement (52) formant un canal de dégazage avec la paroi latérale (42, 43 ; 21) du couvercle (40) ou de l'enveloppe (20).

7. Ensemble de stockage selon l'une quelconque des revendications 1 à 6, dans lequel la bague (50) présente la forme d'un tube, ladite bague (50) comprenant au moins un plot (55) s'étendant radialement sur au moins l'une de ses faces (53, 54), chaque plot (55) définissant au moins partiellement un canal de dégazage avec la paroi latérale (42, 43) du couvercle (40) ou de l'enveloppe (20).

8. Ensemble de stockage selon l'une quelconque des revendications 1 à 7, dans lequel la paroi latérale (42,43 ; 21) du couvercle (20) ou de l'enveloppe (20) comprend au moins un plot s'étendant radialement sur sa face destinée à être en regard avec la bague (50), chaque plot définissant au moins partiellement un canal de dégazage avec la face de la bague destinée à venir en regard de ladite face latérale.

9. Ensemble de stockage selon l'une quelconque des revendications 1 à 8, dans lequel la paroi latérale (42, 43 ; 21) du couvercle (40) ou de l'enveloppe (20) comprend un dégagement (46) destiné à recevoir la bague (50).

10. Ensemble de stockage selon l'une quelconque des revendications précédentes, dans lequel l'enveloppe ou le couvercle d'une part comprend une rainure de positionnement (23), sur une face destinée à être en regard de la bague.(21 ; 42, 43)

11. Ensemble de stockage selon l'une quelconque des revendications précédentes, dans lequel la bague présente une section en pointe sur au moins une de ses faces de sorte que le contact de la bague avec le couvercle ou l'enveloppe soit un contact de type linéaire.

12. Ensemble de stockage selon l'une quelconque des revendications précédentes, dans lequel la bague (50) comprend au moins une languette (60) s'étendant selon la direction longitudinale de la bague et prolongeant localement celle-ci selon cette direction.

13. Ensemble de stockage selon l'une quelconque des revendications précédentes, dans lequel les parois latérales du couvercle (21, 42 ; 21, 44) et de l'enveloppe entre lesquelles est positionnées la bague (50) sont parallèles sur toute la zone au niveau de laquelle elles sont en contact avec la bague.

14. Ensemble de stockage selon l'une quelconque des revendications précédentes, comprenant également une colle (60, 62) positionnée entre les parois latérales (21, 42 ; 21, 44) du couvercle (40) et de l'enveloppe (20), de sorte que la bague (50) est positionnée sur le trajet que la colle (60, 62) doit emprunter pour entrer en contact avec l'élément électrochimique (30) se trouvant à l'intérieur de l'enveloppe.

15. Procédé d'assemblage d'un ensemble de stockage d'énergie électrique comprenant une enveloppe incluant au moins une paroi latérale (21) et au moins une extrémité ouverte, un élément électrochimique, et au moins un couvercle incluant une paroi couvrante et une paroi latérale à la périphérie de la paroi couvrante, le procédé comprenant au moins les étapes suivantes :
- positionner l'élément électrochimique dans l'enveloppe,
- positionner le couvercle sur la face ouverte de l'enveloppe,
- positionner une bague annulaire élastique isolante électriquement entre le couvercle et l'enveloppe
**caractérisé en ce que** le procédé comprend en outre la formation d'au moins un canal de dégazage défini entre la bague (50) et l'enveloppe (20) et/ou entre la bague (50) et le couvercle (40) pour permettre le passage de gaz entre l'intérieur et l'extérieur de l'ensemble de stockage, l'enveloppe ou le couvercle présentant sur une face de sa paroi latérale destinée à être en regard de la bague, au moins un évidement s'étendant au moins partiellement selon la dimension longitudinale de la paroi latérale, chaque évidement formant un canal de dégazage avec la bague.

16. Procédé selon la revendication précédente, dans lequel, une fois le couvercle, l'enveloppe et la bague annulaire positionnés, le procédé comprend les étapes consistant à :
- placer une colle (60, 62) entre les parois latérales (21, 42 ; 21, 44) de l'enveloppe (20) et du couvercle (40) et
- chauffer la colle de sorte qu'elle polymérise.

17. Procédé selon l'une quelconque des revendications 15 ou 16, dans lequel l'étape consistant à positionner la bague annulaire est réalisée postérieurement à l'étape consistant à positionner le couvercle (40) sur l'extrémité ouverte de l'enveloppe (20), ladite étape consistant à positionner la bague annulaire pouvant être réalisée par insertion en force entre les parois latérales (21, 42 ; 21, 44) du couvercle (40) et de l'enveloppe (20).

## Patentansprüche

1. Anordnung zur Speicherung elektrischer Energie, die Folgendes umfasst:
- mindestens eine Hülle (20), die Folgendes umfasst:
o mindestens eine Seitenwand (21) und
o mindestens ein offenes Ende,
- ein elektrochemisches Element (30), das dazu bestimmt ist, in der Hülle (20) enthalten zu sein, und
- mindestens eine Abdeckung (40), die dazu bestimmt ist, im Bereich des einen oder der mehreren der offenen Enden der Hülle (20) positioniert zu sein, wobei jede Abdeckung (40) Folgendes umfasst:
o eine Deckwand (41, 45), die dazu bestimmt ist, das offene Ende der Hülle (20) abzudecken,
o eine Seitenwand (42, 43) am Umfang der Deckwand (41, 45) und die dazu bestimmt ist, gegenüber der Seitenwand (21) der Hülle (20) ausgerichtet zu werden,
- mindestens einen elektrisch isolierenden elastischen ringförmigen Ring (50), der dazu bestimmt ist, zwischen der Seitenwand (21) der Hülle (20) und der Seitenwand (42, 43) der Abdeckung (40) positioniert zu werden,
- mindestens einen Entgasungskanal, der zwischen dem Ring (50) und der Hülle (20) und/oder zwischen dem Ring (50) und der Abdeckung (40) definiert ist, um den Durchgang von Gas zwischen der Innenseite und der Außenseite der Speicherungsanordnung zu ermöglichen,
**dadurch gekennzeichnet, dass** die Hülle oder die Abdeckung auf einer Seite ihrer Seitenwand aufweist, die dazu bestimmt ist, dem Ring gegenüberzustehen, wobei mindestens eine Aussparung sich zumindest teilweise entlang der Längsabmessung der Seitenwand erstreckt, wobei jede Aussparung mit dem Ring einen Entgasungskanal bildet.

2. Speicherungsanordnung nach Anspruch 1, wobei das Material, das den Ring (50) bildet, ein Elastomer ist.

3. Speicherungsanordnung nach Anspruch 2, wobei das Material, das den Ring (50) bildet, Ethylen-Propylen-Dien-Monomer ist.

4. Speicherungsanordnung nach einem der vorhergehenden Ansprüche, wobei das Material, das den Ring (50) bildet, ein Schaumstoff ist.

5. Speicherungsanordnung nach einem der vorhergehenden Ansprüche, wobei der Ring (50) über seine gesamte Höhe geschlitzt ist.

6. Speicherungsanordnung nach Anspruch 1, wobei der Ring (50) die Form eines Rohres aufweist, wobei der Ring (50) mindestens eine Aussparung (52) umfasst, die sich über die gesamte Längsabmessung des Ringes auf mindestens einer seiner Seiten (53, 54) erstreckt, wobei jede Aussparung (52) einen Entgasungskanal mit der Seitenwand (42, 43; 21) der Abdeckung (40) oder der Hülle (20) bildet.

7. Speicherungsanordnung nach einem der Ansprüche 1 bis 6, wobei der Ring (50) die Form eines Rohres aufweist, wobei der Ring (50) mindestens einen Kontakt (55) umfasst, der sich radial auf mindestens einer seiner Seiten (53, 54) erstreckt, wobei jeder Kontakt (55) zumindest teilweise einen Entgasungskanal mit der Seitenwand (42, 43) der Abdeckung (40) oder der Hülle (20) bildet.

8. Speicherungsanordnung nach einem der Ansprüche 1 bis 7, wobei die Seitenwand (42, 43; 21) der Abdeckung (40) oder der Hülle (20) mindestens einen Kontakt umfasst, der sich radial auf seiner Seite erstreckt, die dazu bestimmt ist, dem Ring (50) gegenüberzustehen, wobei jeder Kontakt zumindest teilweise einen Entgasungskanal mit der Seite des Ringes definiert, die dazu bestimmt ist, gegenüber der Seitenwand ausgerichtet zu werden.

9. Speicherungsanordnung nach einem der Ansprüche 1 bis 8, wobei die Seitenwand (42, 43; 21) der Abdeckung (40) oder der Hülle (20) eine Aussparung (46) umfasst, die dazu bestimmt ist, den Ring (50) aufzunehmen.

10. Speicherungsanordnung nach einem der vorhergehenden Ansprüche, wobei die Hülle oder die Abdeckung auf einer Seite eine Positionierungsrille (23) auf einer Fläche umfasst, die dazu bestimmt ist, dem Ring (21; 42, 43) gegenüberzustehen.

11. Speicherungsanordnung nach einem der vorhergehenden Ansprüche, wobei der Ring einen spitzen Abschnitt auf mindestens einer seiner Seiten aufweist, derart, dass der Kontakt des Rings mit der Abdeckung oder der Hülle ein Kontakt des linearen Typs ist.

12. Speicherungsanordnung nach einem der vorhergehenden Ansprüche, wobei der Ring (50) mindestens eine Zunge (60) umfasst, die sich entlang der Längsrichtung des Ringes erstreckt und diese lokal entlang dieser Richtung verlängert.

13. Speicherungsanordnung nach einem der vorhergehenden Ansprüche, wobei die Seitenwände der Abdeckung (21, 42; 21, 44) und der Hülle, zwischen denen der Ring (50) positioniert wird, über den ganzen Bereich, an dem sie mit dem Ring in Berührung stehen, parallel sind.

14. Speicherungsanordnung nach einem der vorhergehenden Ansprüche, die auch einen Klebstoff (60, 62) umfasst, der zwischen den Seitenwänden (21, 42; 21, 44) der Abdeckung (40) und der Hülle (20) angeordnet ist, derart, dass der Ring (50) auf dem Weg positioniert ist, den der Klebstoff (60, 62) nehmen muss, um mit dem elektrochemischen Element (30) in Berührung zu gelangen, das sich im Inneren der Hülle befindet.

15. Verfahren zum Zusammenbauen einer Anordnung zur Speicherung elektrischer Energie, die eine Hülle, die mindestens eine Seitenwand (21) und mindestens ein offenes Ende umfasst, ein elektrochemisches Element und mindestens eine Abdeckung umfasst, die eine Deckwand und eine Seitenwand am Umfang der Deckwand umfasst, wobei das Verfahren mindestens die folgenden Schritte umfasst:
- Positionieren des elektrochemischen Elements in der Hülle,
- Positionieren der Abdeckung auf der offenen Seite der Hülle,
- Positionieren eines elektrisch isolierenden elastischen ringförmigen Rings zwischen der Abdeckung und der Hülle,
**dadurch gekennzeichnet, dass** das Verfahren ferner die Bildung von mindestens einem Entgasungskanal umfasst, der zwischen dem Ring (50) und der Hülle (20) und/oder zwischen dem Ring (50) und der Abdeckung (40) definiert ist, um den Durchgang von Gas zwischen der Innenseite und der Außenseite der Speicherungsanordnung zu ermöglichen, wobei die Hülle oder die Abdeckung auf einer Seite ihrer Seitenwand, die dazu bestimmt ist, dem Ring gegenüberzustehen, mindestens eine Aussparung aufweist, die sich zumindest teilweise entlang der Längsabmessung der Seitenwand erstreckt, wobei jede Aussparung einen Entgasungskanal mit dem Ring bildet.

16. Verfahren nach dem vorhergehenden Anspruch, wobei, nachdem die Abdeckung, die Hülle und der ringförmige Ring positioniert wurden, das Verfahren die Schritte umfasst, die aus Folgendem bestehen:
- Platzieren eines Klebstoffes (60, 62) zwischen den Seitenwänden (21, 42; 21, 44) der Hülle (20) und der Abdeckung (40) und
- Erwärmen des Klebstoffes, derart, dass er polymerisiert.

17. Verfahren nach einem der Ansprüche 15 oder 16, wobei der Schritt, der darin besteht, den ringförmigen Ring zu positionieren, nach dem Schritt ausgeführt wird, der darin besteht, die Abdeckung (40) auf dem offenen Ende der Hülle (20) zu positionieren, wobei der Schritt, der darin besteht, den ringförmigen Ring zu positionieren, durch Einpressen der Abdeckung (40) und der Hülle (20) zwischen den Seitenwänden (21, 42; 21, 44) ausgeführt wird.

## Claims

1. An electrical energy storage assembly including:
- at least one case (20) including:
o at least one side wall (21), and
o at least one open end,
- an electrochemical element (30) intended to be contained in the case (20) and
- at least one cover (40) intended to be positioned at the or at one of the open ends of the case (20), each cover (40) including:
o a covering wall (41, 45) intended to cover the open end of the case (20),
o a side wall (42, 43) on the perimeter of the covering wall (41, 45) and intended to face the side wall (21) of the case (20),
- at least one elastic electrically insulating annular ring (50) intended to be positioned between the side wall (21) of the case (20) and the side wall (42, 43) of the cover (40),
- at least one degassing channel defined between the ring (50) and the case (20) and/or between the ring (50) and the cover (40) to allow the passage of gas between the interior and the outside of the storage assembly,
**characterized in that** the case or the cover has, on one face of its side wall intended to face the ring, at least one recess extending at least partially along the longitudinal dimension of the side wall, each recess forming a degassing channel with the ring.

2. The storage assembly according to claim 1, wherein the material constituting the ring (50) is an elastomer.

3. The storage assembly according to claim 2, wherein the material constituting the ring (50) is ethylene-propylene-diene monomer.

4. The storage assembly according to any of the previous claims, wherein the material constituting the ring (50) is a foam.

5. The storage assembly according to any one of the previous claims, wherein the ring (50) is split over its entire height.

6. The storage assembly according to claim 1, wherein the ring (50) takes the form of a tube, said ring (50) including at least one recess (52) extending over the entire longitudinal dimension of the ring over at least one of its faces (53, 54), each recess (52) forming a degassing channel with the side wall (42, 43; 21) of the cover (40) or of the case (20).

7. The storage assembly according to any one of claims 1 to 6, wherein the ring (50) takes the form of a tube, said ring (50) including at least one pin (55) extending radially on at least one of its faces (53, 54), each pin (55) defining at least partially a degassing channel with the side wall (42, 43) of the cover (40) or of the case (20).

8. The storage assembly according to any one of claims 1 to 7, wherein the side wall (42, 43; 21) of the cover (40) or of the case (20) includes at least one pin extending radially on the face intended to face the ring (50), each pin defining at least partially a degassing channel with the face of the ring intended to face said side face.

9. The storage assembly according to any one of claims 1 to 8, wherein the side wall (42, 43; 21) of the cover (40) or of the case (20) includes a gap (46) intended to accommodate the ring (50).

10. The storage assembly according to any one of the previous claims, wherein the case or the cover, on the one hand, has a positioning groove (23), on a face intended to face the ring (21; 42, 43).

11. The storage assembly according to any one of the previous claims, wherein the ring has a pointed cross-section over at least one of its faces so that the contact of the ring with the cover or the case is a line type contact.

12. The storage assembly according to any one of the previous claims, wherein the ring (50) has at least one tab (60) extending in the longitudinal direction of the ring and locally extending the same in that direction.

13. The storage assembly according to any one of the previous claims, wherein the side walls of the cover (21, 42; 21, 44) and of the case between which the ring (50) is positioned, are parallel over the entire area where they are in contact with the ring.

14. The storage assembly according to any one of the previous claims, also including a glue (60, 62) positioned between the side walls (21, 42; 21, 44) of the cover (40) and of the case (20) so that the ring (50) is positioned on the path that the glue (60, 62) must take to come into contact with the electrochemical element (30) located in the interior of the case.

15. A process for assembling an electrical energy storage assembly including a case including at least one side wall (21) and at least one open end, an electrochemical element, and at least one cover including a covering wall and a side wall at the perimeter of the covering wall, the process including at least the following steps:
- positioning the electrochemical element within the case,
- positioning the cover on the open face of the case,
- positioning an annular elastic electrically
insulating ring between the cover and the case, **characterized in that** the process further comprises the formation of at least one degassing channel defined between the ring (50) and the case (20) and/or between the ring (50) and the cover (40) to allow the passage of gas between the interior and the outside of the storage assembly, the case or the cover having, on one face of its side wall intended to face the ring, at least one recess extending at least partially along the longitudinal dimension of the side wall, each recess forming a degassing channel with the ring.

16. The process according to the previous claim wherein, once the cover, the case and the annular ring are positioned, the process includes the steps consisting of:
- placing a glue (60, 62) between the side walls (21, 42; 21, 44) of the case (20) and the cover (40) and
- heating the glue so that it polymerises.

17. The process according to any one of claims 15 or 16, wherein the step consisting of positioning the annular ring is carried out following the step consisting of positioning the cover (40) on the open end of the case (20), said step consisting of positioning the annular ring being possibly accomplished by forcible insertion between the side walls (21, 42; 21, 44) of the cover (40) and of the case (20).
